(19) Europäisches Patentamt
European Patent Office
Office européen des brevets

(11) Veröffentlichungsnummer: **0 310 976 B1**

(12) **EUROPÄISCHE PATENTSCHRIFT**

(45) Veröffentlichungstag der Patentschrift: **20.01.93**

(51) Int. Cl.[5]: **C08L 67/02**, C08K 7/14, //(C08L67/02,51:04,25:12)

(21) Anmeldenummer: **88116277.0**

(22) Anmeldetag: **01.10.88**

(54) **Glasfaserverstärkte thermoplastische Formmassen auf der Basis von Polyestern und Pfropfpolymerisaten.**

(30) Priorität: **07.10.87 DE 3733838**

(43) Veröffentlichungstag der Anmeldung:
**12.04.89 Patentblatt 89/15**

(45) Bekanntmachung des Hinweises auf die Patenterteilung:
**20.01.93 Patentblatt 93/03**

(84) Benannte Vertragsstaaten:
**BE DE FR GB NL**

(56) Entgegenhaltungen:
**EP-A- 0 064 207**
**EP-A- 0 099 532**
**EP-A- 0 111 260**
**EP-A- 2 376 181**

(73) Patentinhaber: **BASF Aktiengesellschaft**
**Carl-Bosch-Strasse 38**
**W-6700 Ludwigshafen(DE)**

(72) Erfinder: **Lausberg, Dietrich, Dr.**
**Nachtigalstrasse 32a**
**W-6700 Ludwigshafen(DE)**
Erfinder: **Seiler, Erhard, Dr.**
**Erpolzheimer Strasse 1**
**W-6700 Ludwigshafen(DE)**
Erfinder: **Heckmann, Walter, Dr.**
**Geiersbergstrasse 2**
**W-6940 Weinheim(DE)**
Erfinder: **Knoll, Manfred**
**Pfrimmstrasse 1**
**W-6521 Wachenheim(DE)**

EP 0 310 976 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft thermoplastische Formmassen, enthaltend als wesentliche Komponenten

A) 45 bis 90 Gew.% einer Mischung aus

$a_1$) 50 bis 80 Gew.% eines Polyesters
$a_2$) 10 bis 25 Gew.% eines Pfropfpolymerisats aufgebaut aus
$a_{21}$) 50 bis 90 Gew.% einer Pfropfgrundlage aus einem kautschukelastischen Polymeren auf Basis von
$a_{211}$) 95 bis 99,9 Gew.% eines $C_2$-$C_{10}$-Alkylacrylats und
$a_{212}$) 0,1 bis 5 Gew.% eines polyfunktionellen Monomeren mit mindestens zwei olefinischen, nicht konjugierten Doppelbindungen
$a_{22}$) 10 bis 50 Gew.% einer Pfropfauflage aus
$a_{221}$) 5 bis 50 Gew.% einer ersten Hülle aus Styrol oder substituierten Styrolen der allgemeinen Formel I

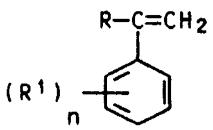

(I)

wobei R einen Alkylrest mit 1 bis 8 C-Atomen, ein Wasserstoffatom oder ein Halogenatom und $R^1$ einen Alkylrest mit 1 bis 8 C-Atomen oder ein Halogenatom darstellen und n den Wert 0, 1, 2 oder 3 hat oder deren Mischungen und
$a_{222}$) 50 bis 95 Gew.% einer zweiten Pfropfhülle aus
$a_{2221}$) 80 bis 100 Gew.% Methacrylsäure oder deren Estern, deren Polymere in Abwesenheit von $a_{21}$) eine Glasübergangstemperatur von mehr als 40 °C aufweisen würden,
$a_{2222}$) 0 bis 20 Gew.% weiteren Comonomeren
und
$a_3$) 10 bis 25 Gew.% eines Copolymerisats aus
$a_{31}$) 50 bis 90 Gew.% Styrol oder substituierten Styrolen der allgemeinen Formel I oder deren Mischungen und
$a_{32}$) 10 bis 50 Gew.% Acrylnitril oder Methacrylnitril oder deren Mischungen,
$a_{33}$) 0 bis 10 Gew.% Monomeren mit Carboxyl-, Carboxylderivat-, Hydroxyl- oder Epoxygruppen
und

B) 5 bis 50 Gew.% Glasfasern.

Außerdem betrifft die Erfindung die Verwendung derartiger Formmassen zur Herstellung von Formkörpern und Formkörper, die aus den erfindungsgemäßen Formmassen als wesentliche Komponenten erhältlich sind.

In der DE-B-27 58 497 werden thermoplastische Formmassen auf der Basis von Polyestern und modifizierten Styrol/Acrylnitril (SAN)-Copolymeren beschrieben, wobei als Modifizierungsmittel Acrylester und/oder $\alpha$-Methylstyrol eingesetzt werden. In den Beispielen werden sogenannte ASA-Polymere als modifizierte SAN-Polymere eingesetzt. Falls in diesen Massen das modifizierte SAN-Polymere die Hauptkomponente darstellt, lassen sich vorteilhaft Folien daraus herstellen. Die mechanischen Eigenschaften sind jedoch insgesamt noch nicht voll zufriedenstellend, insbesondere im Hinblick auf die Schlagzähigkeit und Biegefestigkeit. Auch die Stabilität der Eigenschaften bei längerer Lagerung bei höheren Temperaturen ist nicht befriedigend.

Der vorliegenden Erfindung lag daher die Aufgabe zugrunde, thermoplastische Formmassen auf der Basis von Polyestern und Pfropfpolymeren zur Verfügung zu stellen, die die vorstehend beschriebenen Nachteile nicht aufweisen. Insbesondere sollte auch eine zufriedenstellende Langzeitstabilität der mechanischen Eigenschaften bei erhöhten Temperaturen erreicht werden.

Diese Aufgabe wird erfindungsgemäß durch die eingangs definierten thermoplastischen Formmassen gelöst.

Als Komponente A enthalten die erfindungsgemäßen Formmassen 45 bis 90, insbesondere 55 bis 90

und besonders bevorzugt 60 bis 85 Gew.% einer Mischung aus

$a_1$) 50 bis 80 Gew.% eines Polyesters

$a_2$) 10 bis 25 Gew.% eines Pfropfpolymerisats und

$a_3$) 10 bis 25 Gew.% eines Styrol-(Meth)-Acrylnitril-Copolymerisats.

Die in den erfindungsgemäßen Formmassen enthaltenen Polyester $a_1$) sind an sich bekannt. Vorzugsweise werden Polyester verwendet, die einen aromatischen Ring in der Hauptkette enthalten. Der aromatische Ring kann auch substituiert sein, z.B. durch Halogene, wie Chlor und Brom und/oder durch $C_1$-$C_4$-Alkylgruppen, wie z.B. Methyl-, Ethyl-, i- bzw. n-Propyl- und i- bzw. n- bzw. t-Butylgruppen.

Die Herstellung der Polyester kann durch Reaktion von Dicarbonsäuren, deren Estern oder anderer esterbildender Derivate mit Dihydroxyverbindungen in an sich bekannter Weise erfolgen.

Als Dicarbonsäuren kommen beispielsweise aliphatische und aromatische Dicarbonsäuren in Frage, die auch als Mischung eingesetzt werden können. Nur beispielsweise seien hier Naphthalindicarbonsäuren, Terephthalsäure, Isophthalsäure, Adipinsäure, Azelainsäure, Sebacinsäure, Dodecandisäure und Cyclohexandicarbonsäuren, Mischungen dieser Carbonsäuren und esterbildende Derivate derselben genannt.

Als Dihydroxyverbindungen werden vorzugsweise Diole mit 2 bis 6 C-Atomen, besonders bevorzugt Ethylenglykol, 1,4-Butandiol, 1,4-Butendiol und 1,6-Hexandiol verwendet; es können jedoch auch 1,4-Hexandiol, 1,4-Cyclohexandiol, 1,4-Di-(hydroxymethyl)cyclohexan, Bisphenol A, Neopentylglykol, Mischungen dieser Diole sowie esterbildende Derivate derselben eingesetzt werden.

Polyester aus Terephthalsäure und einer $C_2$-$C_6$-Diolkomponente, wie z.B. Polyethylenterephthalat oder Polybutylenterephthalat oder deren Mischungen werden besonders bevorzugt.

Die relative Viskosität $\eta_{spec}/c$ der Polyester, gemessen an einer 0,5 gew.%igen Lösung in einem Phenol/o-Dichlorbenzolgemisch (Gewichtsverhältnis 3:2) bei 25° C liegt im allgemeinen im Bereich von 1,2 bis 1,8 dl/g.

Der Anteil der Polyester $a_1$) an der Komponente A beträgt 50 bis 80, vorzugsweise 50 bis 75 und insbesondere 50 bis 70 Gew.%, bezogen auf das Gesamtgewicht der Komponenten $a_1$) + $a_2$) + $a_3$).

Das Pfropfpolymerisat $a_2$), welches 10 bis 25, insbesondere 12 bis 25, besonders bevorzugt 12 bis 20 Gew.% der Komponente A ausmacht, ist aufgebaut aus

$a_{21}$) 50 bis 90 Gew.% einer Pfropfgrundlage auf Basis von

$a_{211}$) 95 bis 99,9 Gew.% eines $C_2$-$C_{10}$-Alkylacrylats und

$a_{212}$) 0,1 bis 5 Gew.% eines difunktionellen Monomeren mit zwei olefinischen, nicht konjugierten Doppelbindungen, und

$a_{22}$) 10 bis 50 Gew.% einer Pfropfauflage aus

$a_{221}$) 5 bis 50 Gew.% einer ersten Hülle aus Styrol oder substituierten Styrolen der allgemeinen Formel

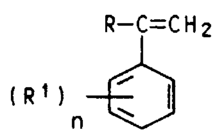

(I)

wobei R einen Alkylrest mit 1 bis 8 C-Atomen, ein Wasserstoffatom oder ein Halogenatom und $R^1$ einen Alkylrest mit 1 bis 8 C-Atomen oder ein Halogenatom darstellen und n den Wert 0, 1, 2 oder 3 hat

oder deren Mischungen und

$a_{222}$) 50 bis 95 Gew.% einer zweiten Pfropfhülle aus

$a_{2221}$) 80 bis 100 Gew.% Methacrylsäure oder deren Estern, deren Polymeren in Abwesenheit von $a_{21}$) eine Glasübergangstemperatur von mehr als 40° C aufweisen würden,

$a_{2222}$) 0 bis 20 Gew.% weiteren Comonomeren.

Bei der Komponente $a_{21}$) handelt es sich um ein Elastomeres, welches eine Glasübergangstemperatur von unter -20, insbesondere unter -30° C aufweist.

Für die Herstellung des Elastomeren werden als Hauptmonomere $a_{211}$) Ester der Acrylsäure mit 2 bis 10 C-Atomen, insbesondere 4 bis 8 C-Atomen eingesetzt. Als besonders bevorzugte Monomere seien hier tert.-, iso- und n-Butylacrylat sowie 2-Ethylhexylacrylat genannt, von denen die beiden letztgenannten besonders bevorzugt werden.

Neben diesen Estern der Acrylsäure werden 0,1 bis 5, insbesondere 1 bis 4 Gew.%, bezogen auf das Gesamtgewicht $a_{211}$ + $a_{212}$, eines polyfunktionellen Monomeren mit mindestens zwei olefinischen, nicht konjugierten Doppelbindungen eingesetzt. Von diesen werden difunktionelle Verbindungen, d.h. mit zwei

nicht konjugierten Doppelbindungen bevorzugt verwendet. Beispielsweise seien hier Divinylbenzol, Diallylfumarat, Diallylphthalat, Triallylcyanurat, Triallylisocyanurat, Tricyclodecenylacrylat und Dihydrodicyclopentadienylacrylat genannt, von denen die beiden letzten besonders bevorzugt werden.

Verfahren zur Herstellung der Pfropfgrundlage $a_{21}$) sind an sich bekannt und z.B. in der DE-B 1 260 135 beschrieben. Entsprechende Produkte sind auch kommerziell im Handel erhältlich.

Als besonders vorteilhaft hat sich in einigen Fällen die Herstellung durch Emulsionspolymerisation erwiesen.

Die genauen Polymerisationsbedingungen, insbesondere Art, Dosierung und Menge des Emulgators werden vorzugsweise so gewählt, daß der Latex des Acrylsäureesters, der zumindest teilweise vernetzt ist, eine mittlere Teilchengröße (Gewichtsmittel $d_{50}$) im Bereich von etwa 200 bis 700, insbesondere von 250 bis 600 nm aufweist. Vorzugsweise hat der Latex eine enge Teilchengrößenverteilung, d.h. der Quotient

$$Q = \frac{d_{90} - d_{10}}{d_{50}}$$

ist vorzugsweise kleiner als 0,5, insbesondere kleiner als 0,35.

Der Anteil der Pfropfgrundlage $a_{21}$) am Pfropfpolymerisat $a_2$) beträgt 50 bis 90, vorzugsweise 55 bis 85 und insbesondere 60 bis 80 Gew.%, bezogen auf das Gesamtgewicht von $a_2$).

Auf die Pfropfgrundlage $a_{21}$) ist eine erste Pfropfhülle $a_{221}$) aufgepfropft, die aus Styrol oder substituierten Styrolen der allgemeinen Formel I

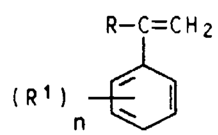

aufgebaut ist, wobei R Alkylreste mit 1 bis 8 C-Atomen, Wasserstoffatome oder Halogenatome und $R^1$ Alkylreste mit 1 bis 8 C-Atomen oder Halogenatome darstellen und n den Wert 0, 1, 2 oder 3 hat.

Die erste Pfropfhülle $a_{221}$) macht 5 bis 50, vorzugsweise 10 bis 45 und insbesondere 15 bis 40 Gew.% der Pfropfauflage $a_{22}$) aus.

Beispiele für substituierte Styrole sind $\alpha$-Methylstyrol, p-Methylstyrol, p-Chlorstyrol und p-Chlor-$\alpha$-Methylstyrol, wovon Styrol und $\alpha$-Methylstyrol bevorzugt werden.

Die zweite Pfropfhülle $a_{222}$), die 50 bis 95, insbesondere 55 bis 90 und besonders bevorzugt 60 bis 85 Gew.% der Komponente $a_{22}$) ausmacht, ist aufgebaut aus (Meth)acrylsäure und/oder deren Estern, deren Polymere in Abwesenheit von $a_{21}$) eine Glasübergangstemperatur von mehr als 40 ° C, insbesondere mehr als 50 ° C, aufweisen würden, d.h. die zweite Propfhülle ist eine harte (thermoplastische) Schale.

Bevorzugte Methacrylsäureester $a_{2221}$) sind solche mit $C_1$-$C_6$-Alkoholen und Glycidylmethacrylat; besonders bevorzugt werden Methylmethacrylat, t-Butylmethacrylat, Glycidylmethacrylat und Methacrylsäure selbst sowie deren Mischungen.

Neben Methacrylsäureestern eignen sich prinzipiell auch Acrylsäurederivate, solange deren Polymere eine Glasübergangstemperatur (Tg) von mehr als 40 ° C aufweisen bzw. deren Anteil nicht so hoch ist, so daß sich insgesamt für die zweite Hülle immer noch eine Tg von mehr als 40 ° C ergibt.

Als Beispiel seien hier nur Acrylsäure-$C_1$-$C_6$-Alkylester, insbesondere n-Butylacrylat, genannt.

Neben (Meth)acrylsäure bzw. deren Estern können noch bis zu 20 Gew.% weitere copolymerisierbare Monomere am Aufbau der zweiten Pfropfhülle beteiligt sein. Nur beispielsweise seien hier Styrol und Acrylnitril genannt. Vorzugsweise sind jedoch neben den Monomeren $a_{2211}$) keine weiteren Monomeren vorhanden.

Die Herstellung der Pfropfhülle $a_{22}$) kann nach an sich bekannten und in der Literatur beschriebenen Verfahren erfolgen, indem zunächst die Monomeren, die die erste Pfropfhülle bilden, in Gegenwart der Komponenten $a_{21}$) polymerisiert werden und anschließend in einem zweiten Schritt die äußere (harte) Hülle $a_{222}$) aufgebracht wird.

Durch Mitverwendung von polyfunktionellen Monomeren (wie die Monomere $a_{211}$) können auch die Pfropfhüllen vernetzt werden.

Vorzugsweise wird die Pfropfhülle in Emulsion hergestellt, wie dies z.B. in der DE-PS 1 260 135, DE-OS

32 27 555, DE-OS 31 49 357, DE-OS 34 14 118 beschrieben ist.

Je nach den gewählten Bedingungen entsteht bei der Pfropfmischpolymerisation ein bestimmter Anteil an freien Copolymerisaten von Styrol bzw. substituierten Styrolderivaten bzw. (Meth)Acrylsäure und deren Derivaten.

Das Pfropfmischpolymerisat ($a_{21}+a_{22}$) weist im allgemeinen eine mittlere Teilchengröße von 100 bis 1000 nm, im besonderen von 200 bis 700 nm ($d_{50}$-Gewichtsmittelwert) auf. Die Bedingungen bei der Herstellung des Elastomeren $a_{21}$) und bei der Pfropfung werden daher vorzugsweise so gewählt, daß Teilchengrößen in diesem Bereich resultieren. Maßnahmen hierzu sind bekannt und z.B. in der DE-PS 1 260 135 und der DE-OS 28 26 925 sowie in Journal of Applied Polymer Science, Vol. 9 (1965), S. 2929 bis 2938 beschrieben. Die Teilchenvergrößerung des Latex des Elastomeren kann z.B. mittels Agglomeration bewerkstelligt werden.

Zum Pfropfpolymerisat $a_2$ zählen im Rahmen dieser Erfindung auch die bei der Pfropfmischpolymerisation zur Herstellung der Komponente $a_{22}$) entstehenden freien, nicht gepfropften Homo- und Copolymerisate.

Nachstehend seien einige bevorzugte Pfropfpolymerisate angeführt:

$a_2$/1: 60 Gew.% Pfropfgrundlage $a_{21}$) aus
$a_{211}$) 98 Gew.% n-Butylacrylat und
$a_{212}$) 2 Gew.% Dihydrodicyclopentadienylacrylat und
40 Gew.% Pfropfhülle $a_{22}$) aus
25 Gew.% Styrol (1. Pfropfhülle $a_{221}$) und
75 Gew.% Methylmethacrylat (2. Pfropfhülle $a_{222}$)

$a_2$/2: Pfropfgrundlage wie bei $a_2$/1 mit 5 Gew.% einer ersten Pfropfhülle aus Styrol und
35 Gew.% einer zweiten Pfropfstufe $a_{222}$) aus
85 Gew.% Methylmethacrylat und
15 Gew.% Acrylnitril

$a_2$/3: Pfropfgrundlage wie bei $a_2$/1 mit 13 Gew.% einer ersten Pfropfstufe aus Styrol und 27 Gew.% einer zweiten Pfropfstufe aus Methylmethacrylat und n-Butylacrylat im Gewichtsverhältnis 90:10.

Als Komponente $a_3$) enthalten die erfindungsgemäßen Formmassen 10 bis 25, vorzugsweise 12 bis 20 Gew.% eines Copolymerisats aus

$a_{31}$) 50 bis 90, vorzugsweise 55 bis 90 und insbesondere 65 bis 80 Gew.% Styrol und/oder substituierten Styrolen der allgemeinen Formel I und

$a_{32}$) 10 bis 50, vorzugsweise 10 bis 45 und insbesondere 20 bis 35 Gew.% Acrylnitril und/oder Methacrylnitril.

$a_{33}$) 0 bis 10 Gew.% Monomeren mit Carboxyl-, Carboxylderivat-, Hydroxyl-oder Epoxygruppen.

Derartige Produkte können z.B. nach dem in den DE-AS 10 01 001 und DE-AS 10 03 436 beschriebenen Verfahren hergestellt werden. Auch im Handel sind solche Copolymere erhältlich. Vorzugsweise liegt der durch Lichtstreuung bestimmte Gewichtsmittelwert des Molekulargewichts im Bereich von 50.000 bis 500.000, insbesondere von 100.000 bis 250.000.

Falls Monomere $a_{33}$) vorhanden sind, beträgt deren Anteil an der Komponente $a_3$) 0,1 bis 10, vorzugsweise 0,2 bis 10 und insbesondere 0,5 bis 8 Gew.%, bezogen auf das Gesamtgewicht von $a_3$).

Beispiele für Monomere $a_{33}$) sind Methacrylsäureglycidylester, Acrylsäureglycidylester, Allylglycidylether, Vinylglycidylether und Itaconsäureglycidylester, sowie Acrylsäure, Methacrylsäure und ihre Metall-, insbesondere Alkalimetallsalze und Ammoniumsalze, tertiäre Ester von Acrylsäure und Methacrylsäure, Maleinsäure, Maleinsäureanhydrid, Metallsalze des sauren Monoethylesters der Maleinsäure, Fumarsäure, Fumarsäuremonoethylester, Itaconsäure, Vinylbenzoesäure, Vinylphthalsäure, Salze von Fumarsäuremonoethylester, Monoester von Maleinsäure, Fumarsäure und Itaconsäure mit Alkoholen ROH, wobei R bis zu 29 Kohlenstoffatomen aufweist, z.B. Methyl, Propyl, Isopropyl, Butyl, Isobutyl, Hexyl, Cyclohexyl, Octyl, 2-Ethylhexyl, Decyl, Stearyl, Methoxyethyl, Ethoxyethyl und Hydroxyethyl.

Maleinsäureanhydrid und Metallsalze (insbesondere Alkalimetall und Erdalkalimetallsalze) von polymerisierbaren Carbonsäuren weisen zwar keine freien Carboxylgruppen auf, kommen aber in ihrem Verhalten den freien Säuren nahe, so daß sie hier von dem Oberbegriff carboxylgruppenhaltige Monomere mit umfaßt werden sollen.

Als zweite Gruppe von Monomeren $a_{223}$) sind Lactamgruppen enthaltende Monomere geeignet.

Diese enthalten eine Lactamgruppe der allgemeinen Formel

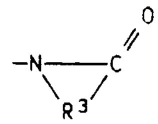

wobei $R^3$ eine verzweigte oder lineare Alkylengruppe mit 2 bis 15 C-Atomen darstellt.

Nur stellvertretend seien hier $\beta$-Propiolactame (Azetidin-2-one) der allgemeinen Formel

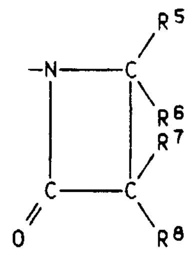

wobei die Substituenten $R^5$ bis $R^8$ eine Alkylgruppe mit 1 bis 6 C-Atomen oder ein Wasserstoffatom sein können, genannt. Diese werden von R. Graf in Angew. Chem. 74 (1962), 523-530 und H. Bastian in Angew. Chem. 80 (1968), 304-312 beschrieben. Beispiele hierfür sind 3,3'-Dimethyl-3-propiolactam, 2-Pyrrolidone

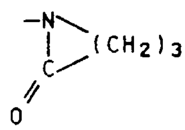 ,

$\epsilon$-Caprolactam

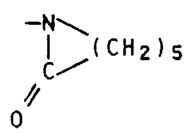 ,

7-Önantholactam, 8-Capryllactam und 12 Laurinlactam, wie sie auch von H. Dachs, Angew. Chemie 74 (1962), 540-45 beschrieben werden.

Von diesen werden 2-Pyrrolidone und $\epsilon$-Caprolactame besonders bevorzugt.

Vorzugsweise sind die Lactamgruppen wie in

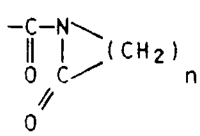

über eine Carbonylgruppe am Stickstoff in die entsprechenden Monomeren eingebaut.

Ein besonders bevorzugtes Beispiel hierfür ist N-(Meth)acryloyl-$\epsilon$-Caprolactam

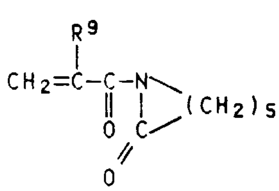

wobei $R^9$ ein Wasserstoffatom oder eine Methylgruppe ist.

Bevorzugte Monomere $a_{33}$) sind Glycidylester der Acrylsäure und Methacrylsäure, Maleinsäureanhydrid, tert.-Butylacrylat, Fumarsäure und Maleinsäure.

Das Gewichtsverhältnis von $a_2$:$a_3$ liegt im Bereich von 1:2,5 bis 2,5:1, vorzugsweise von 1:2 bis 2:1 und insbesondere von 1:1,5 bis 1,5:1.

Als Komponente B) enthalten die erfindungsgemäßen Formmassen 5 bis 50, insbesondere 7 bis 45 und besonders bevorzugt 8 bis 40 Gew.%, bezogen auf das Gesamtgewicht der Formmassen, an Glasfasern. Dabei handelt es sich um kommerziell erhältliche Produkte.

Diese haben in der Formmasse im allgemeinen eine mittlere Länge von 0,1 bis 0,5 mm, vorzugsweise von 0,1 bis 0,4 mm und einen Durchmesser im Bereich von 6 bis 20 $\mu$m. Besonders bevorzugt sind Glasfasern aus E-Glas. Zur Erzielung einer besseren Haftung können die Glasfasern mit Organosilanen, Epoxisilanen oder anderen Polymerüberzügen beschichtet sein.

Neben den Komponenten A) und B) können die erfindungsgemäßen Formmassen übliche Zusatzstoffe und Verarbeitungshilfsmittel enthalten.

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, pulverförmige Füll- und Verstärkungsmittel und Weichmacher. Solche Zusatzstoffe werden in den üblichen wirksamen Mengen eingesetzt.

Die Stabilisatoren können den Massen in jedem Stadium der Herstellung der thermoplastischen Massen zugesetzt werden. Vorzugsweise werden die Stabilisatoren zu einem frühen Zeitpunkt zugesetzt, um zu verhindern, daß die Zersetzung bereits beginnt, bevor die Masse geschützt werden kann. Solche Stabilisatoren müssen mit der Masse verträglich sein.

Zu den Oxidationsverzögerern und Wärmestabilisatoren, die den thermoplastischen Massen gemäß der Erfindung zugesetzt werden können, gehören diejenigen, die allgemein zu Polymeren zugesetzt werden, wie Halogenide von Metallen der Gruppe I des periodischen Systems, z.B. Natrium-, Kalium-, Lithium-Halogenide in Verbindung mit Kupfer-(I)-Halogeniden, z.B. Chlorid, Bromid oder Jodid. Ferner sind geeignete Stabilisatoren sterisch gehinderte Phenole, Hydrochinone, verschiedene substituierte Vertreter dieser Gruppe um Kombinationen derselben in Konzentrationen bis 1 Gew.%, bezogen auf das Gewicht der Mischung.

Als UV-Stabilisatoren kann man ebenfalls diejenigen, die allgemein zu Polymeren zugesetzt werden, in Mengen bis zu 2,0 Gew.%, bezogen auf das Gesamtgewicht der Mischung verwenden. Beispiele für UV-Stabilisatoren sind verschiedene substituierte Resorcine, Salicylate, Benzotriazole, Benzophenone und dergleichen.

Geeignete Gleit- und Entformungsmittel, die z.B. in Mengen bis zu 1 Gew.% der thermoplastischen Masse zugesetzt werden, sind Stearinsäuren, Stearylalkohol, Stearinsäureester und -amide.

Ferner können zugesetzt werden organische Farbstoffe wie Nigrosin, Pigmente, z.B. Titandioxid, Cadmiumsulfid, Cadmiumsulfid-selenid, Phthalocyanine, Ultramarinblau oder Ruß.

Auch Keimbildungsmittel, wie Talkum, Calciumfluorid, Natriumphenylphosphinat, Aluminiumoxid oder feinteiliges Polytetrafluorethylen können in Mengen z.B. bis zu 5 Gew.%, bezogen auf die Masse, angewandt werden. Weichmacher, wie Phthalsäuredioctylester, Phthalsäuredibenzylester, Phthalsäurebutylbenzylester, Kohlenwasserstofföle, N-(n-Butyl)benzolsulfonamid, o- und p-Toluolethylsulfonamid werden vorteilhaft in Mengen bis etwa 20 Gew.%, bezogen auf die Formmasse, zugesetzt. Färbemittel, wie Farbstoffe und Pigmente können in Mengen bis zu etwa 5 Gew.%, bezogen auf die Formmasse, zugesetzt werden.

Die erfindungsgemäßen thermoplastischen Formmassen können hergestellt werden indem man die Komponenten $a_1$, $a_2$ und $a_3$ mischt, in einem Extruder aufschmilzt und die Glasfasern über einen Einlaß am Extruder zuführt.

Derartige Verfahren sind an sich bekannt und in der Literatur beschrieben. Die Mischtemperaturen im Extruder liegen im allgemeinen im Bereich von 240 bis 300 °C. Die erfindungsgemäßen Formmassen zeichnen sich durch eine gute Festigkeit, hohe Schlagzähigkeit und eine besonders gute Oberflächenstruktur der daraus hergestellten Formteile aus. Darüber hinaus wird auch eine Verbesserung der Langzeitstabilität gegen Wasser und Hitzeeinwirkung im Vergleich zu entsprechenden Massen ohne die Komponente B erzielt.

Beispiele 1 bis 10

Es wurden folgende Komponenten eingesetzt:

$a_1$) Polybutylenterephthalat mit einer Viskositätszahl von 108, gemessen nach DIN 53 728, Teil 3

$a_2$/1 Pfropfpolymerisat mit
$a_{21}$) 60 Gew.% einer Pfropfgrundlage aus
$a_{211}$) 98 Gew.% n-Butylacrylat und
$a_{212}$) 2 Gew.% Dihydrodicyclopentadienylacrylat,
$a_{221}$) 10 Gew.% einer ersten Pfropfhülle aus Styrol und
$a_{222}$) 30 Gew.% einer zweiten Pfropfhülle aus Methylmethacrylat, hergestellt nach dem in der DE-OS 24 44 584 beschriebenen Verfahren.
$a_2$/2 Pfropfpolymerisat mit
$a_{21}$) 70 Gew.% einer Pfropfgrundlage aus
$a_{211}$) 98 Gew.% n-Butylacrylat und
$a_{212}$) 2 Gew.% Dihydrodicyclopentadienylacrylat,
$a_{22}$) 30 Gew.% einer Pfropfauflage aus
$a_{221}$) 33,3 Gew.% einer ersten Hülle aus Styrol und
$a_{222}$) 66,7 Gew.% einer zweiten Hülle aus
$a_{2222}$) 80 Gew.% Methylmethacrylat
15 Gew.% n-Butylacrylat
2,5 Gew.% Butandioldiacrylat und
2,5 Gew.% Glycidylmethacrylat
hergestellt wie $a_2$/1.

Zum Vergleich wurde Pfropfpolymerisat $a_2$/V hergestellt, welches folgenden Aufbau hatte:
$a_{21}$) 60 Gew.% Pfropfgrundlage aus
$a_{211}$) 98 Gew.% n-Butylacrylat
$a_{212}$) 2 Gew.% Dihydrodicyclopentadienylacrylat
$a_{22}$) 40 Gew.% Pfropfauflage aus
75 Gew.% Styrol und
25 Gew.% Acrylnitril,
hergestellt nach dem in der DE-OS 24 44 584 beschriebenen Verfahren.

$a_3$ Styrol/Acrylnitril-Copolymerisat aus 65 Gew.% Styrol und 35 Gew.% Acrylnitril mit einer Viskositätszahl von 80, gemessen 0,5 %ig in Dimethylformamid (DMF) bei 25 °C

B Glasfasern aus E-Glas

Die Komponenten $a_1$, $a_2$ und $a_3$ wurden gemischt, in einem Extruder aufgeschmolzen und die Glasfasern B) der Schmelze über den Extruder zugeführt. Die Extrusionstemperatur betrug 270 °C. Dann wurden die Massen in ein Wasserbad extrudiert, granuliert und getrocknet. Anschließend wurden ohne weitere Nachbehandlung auf einer Spritzgußmaschine Prüfkörper hergestellt.

Die mechanischen und thermischen Eigenschaften wurden folgendermaßen bestimmt:

| | |
|---|---|
| E-Modul: | DIN 53 457 |
| Schlagzähigkeit $a_n$: | DIN 53 453 (bei 23 °C) |
| Kerbschlagzähigkeit: | DIN 53 453 (bei 23 °C) |

Die Zusammensetzungen der Formmassen und die Ergebnisse der Messungen sind der Tabelle zu entnehmen.

Tabelle

| (alle Mengenangaben in Gew.%) | | | | | | | |
|---|---|---|---|---|---|---|---|
| Bsp. | Zusammensetzung | | | | E-Modul N/mm | Schlagzähigkeit kJ/m² | Kerbschlagzähigkeit kJ/m² |
| | $a_1$ | $a_2$ | $a_3$ | B | | | |
| 1V | 49 | 11 $a_2$/V | 10 | 30 | 9400 | 35 | 7,5 |
| 2V | 56 | 12 $a_2$/V | 12 | 20 | 7200 | 32 | 8,0 |
| 3V | 42 | 14 $a_2$/V | 14 | 30 | 9300 | 34 | 8,0 |
| 4 | 49 | 11 $a_2$/1 | 10 | 30 | 9300 | 39 | 8,5 |
| 5 | 49 | 11 $a_2$/2 | 10 | 30 | 9400 | 43 | 9,5 |
| 6 | 49 | 13 $a_2$/2 | 8 | 30 | 8600 | 47 | 12,0 |
| 7 | 56 | 12 $a_2$/1 | 12 | 20 | 7300 | 38 | 9,5 |
| 8 | 56 | 12 $a_2$/2 | 12 | 20 | 7400 | 40 | 11,0 |
| 9 | 42 | 14 $a_2$/1 | 14 | 20 | 7400 | 40 | 10,0 |
| 10 | 42 | 14 $a_2$/2 | 14 | 30 | 9300 | 43 | 12,5 |
| V = Vergleichsversuch | | | | | | | |

**Patentansprüche**

**1.** Thermoplastische Formmassen, enthaltend als wesentliche Komponenten

A) 45 bis 90 Gew.% einer Mischung aus
$a_1$) 50 bis 80 Gew.% eines Polyesters
$a_2$) 10 bis 25 Gew.% eines Pfropfpolymerisats aufgebaut aus
$a_{21}$) 50 bis 90 Gew.% einer Pfropfgrundlage aus einem kautschukelastischen Polymeren auf Basis von
$a_{211}$) 95 bis 99,9 Gew.% eines $C_2$-$C_{10}$-Alkylacrylats und
$a_{212}$) 0,1 bis 5 Gew.% eines polyfunktionellen Monomeren mit mindestens zwei olefinischen, nicht konjugierten Doppelbindungen
$a_{22}$) 10 bis 50 Gew.% einer Pfropfauflage aus
$a_{221}$) 5 bis 50 Gew.% einer ersten Hülle aus Styrol oder substituierten Styrolen der allgemeinen Formel I

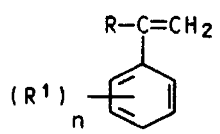

(I)

wobei R einen Alkylrest mit 1 bis 8 C-Atomen, ein Wasserstoffatom oder ein Halogenatom und $R^1$ einen Alkylrest mit 1 bis 8 C-Atomen oder ein Halogenatom darstellen und n den Wert 0, 1, 2 oder 3 hat oder deren Mischungen und
$a_{222}$) 50 bis 95 Gew.% einer zweiten Pfropfhülle aus
$a_{2221}$) 80 bis 100 Gew.% Methacrylsäure oder deren Estern, deren Polymere in Abwesenheit von $a_{21}$) eine Glasübergangstemperatur von mehr als 40 °C aufweisen würden,
$a_{2222}$) 0 bis 20 Gew.% weiteren Comonomeren
und
$a_3$) 10 bis 25 Gew.% eines Copolymerisats aus
$a_{31}$) 50 bis 90 Gew.% Styrol oder substituierten Styrolen der allgemeinen Formel I oder deren Mischungen und
$a_{32}$) 10 bis 50 Gew.% Acrylnitril oder Methacrylnitril oder deren Mischungen,
$a_{33}$) 0 bis 10 Gew.% Monomeren mit Carboxyl-, Carboxylderivat-, Hydroxyl- oder Epoxygruppen
und

B) 5 bis 50 Gew.% Glasfasern.

2. Verwendung der thermoplastischen Formmassen gemäß Anspruch 1 zur Herstellung von Formkörpern und Formteilen.

3. Formkörper, erhältlich aus thermoplastischen Formmassen gemäß Anspruch 1 als wesentliche Komponenten.

## Claims

1. A thermoplastic molding composition containing as essential components
A) from 45 to 90 % by weight of a mixture of
$a_1$) from 50 to 80 % by weight of a polyester
$a_2$) from 10 to 25 % by weight of a graft polymer built up from
$a_{21}$) from 50 to 90 % by weight of a grafting base comprising an elastomeric polymer based on
$a_{211}$) from 95 to 99.9 % by weight of a $C_2$-$C_{10}$-alkyl acrylate
and
$a_{212}$) from 0.1 to 5 % by weight of a polyfunctional monomer having at least two olefinic, nonconjugated double bonds
$a_{22}$) from 10 to 50 % by weight of a graft surface comprising
$a_{221}$) from 5 to 50 % by weight of a first sheath of styrene or substituted styrene of the general formula I

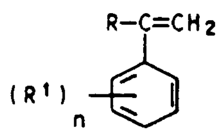

(I)

where R is alkyl of from 1 to 8 carbon atoms, hydrogen or halogen, $R^1$ is alkyl of from 1 to 8 carbon atoms or halogen, and n is 0, 1, 2 or 3, or a mixture thereof,
and
$a_{222}$) from 50 to 95% by weight of a second graft sheath of
$a_{2221}$) from 80 to 100 % by weight of methacrylic acid or ester whose polymer would in the absence of $a_{21}$) have a glass transition temperature of more than 40 °C
and
$a_{2222}$) from 0 to 20 % by weight of further comonomers,
$a_3$) from 10 to 25% by weight of a copolymer of
$a_{31}$) from 50 to 90 % by weight of styrene or substituted styrene of the general formula I or a mixture thereof and
$a_{32}$) from 10 to 50 % by weight of acrylonitrile or methacrylonitrile or a mixture thereof, and
$a_{33}$) from 0 to 10 % by weight of a monomer having carboxyl, carboxyl derivatives, hydroxyl or epoxy groups
and
B) from 5 to 50 % by weight of glass fibers.

2. Use of a thermoplastic molding composition as claimed in claim 1 for producing moldings.

3. A molding obtainable from a thermoplastic composition as claimed in claim 1 as essential component.

## Revendications

1. Masses à mouler thermoplastiques, contenant, en tant que composants essentiels
A) 45 à 90% en poids d'un mélange
$a_1$) de 50 à 80% en poids d'un polyester,
$a_2$) de 10 à 25% en poids d'un polymère greffé, constitué par
$a_{21}$) 50 à 90% en poids d'une base de greffage composée d'un polymère ayant l'élasticité du

caoutchouc, à base de

$a_{211}$) 95 à 99,9% en poids d'un acrylate d'alkyle en $C_2$-$C_{10}$ et

$a_{212}$) 0,1 à 5% en poids d'un monomère polyfonctionnel, comportant au moins deux doubles liaisons oléfiniques non conjuguées,

$a_{22}$) 10 à 50% en poids d'un greffon composé de

$a_{221}$) 5 à 50% en poids d'une première enveloppe en styrène ou en styrènes substitués de formule générale I

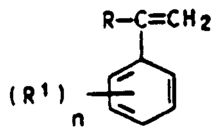

(I)

dans laquelle R représente un reste alkyle à 1-8 atomes de carbone, un atome d'hydrogène ou un atome d'halogène, $R^1$ représente un reste alkyle à 1-8 atomes de carbone ou un atome d'halogène et n a la valeur 0, 1, 2 ou 3, ou de mélanges de ces styrènes,

$a_{222}$) 50 à 95% en poids d'une deuxième enveloppe composée de

$a_{2221}$) 80 à 100% en poids d'acide méthacrylique ou d'esters de celui-ci, dont les polymères présenteraient, en l'absence de $a_{21}$), une température de transition vitreuse de plus de 40 ° C,

$a_{2222}$) 0 à 20% en poids d'autres comonomères,

et

$a_3$) de 10 à 25% en poids d'un copolymère de

$a_{31}$) 50 à 90% en poids de styrène, de styrènes substitués de formule générale I ou de mélanges de ceux-ci,

$a_{32}$) 10 à 50% en poids d'acrylonitrile, de méthacrylonitrile ou de mélanges de ceux-ci,

$a_{33}$) 0 à 10% en poids de monomères contenant des groupements carboxyle, dérivés de carboxyle, hydroxy ou époxy,

et

B) 5 à 50% en poids de fibres de verre.

**2.** Utilisation des masses à mouler thermoplastiques selon la revendication 1 pour la fabrication de corps moulés et de pièces moulées.

**3.** Corps moulés, obtenus à partir de masses à mouler thermoplastiques selon la revendication 1 en tant que composant essentiel.